# EUROPEAN PATENT SPECIFICATION

(11) **EP 2 615 147 B1**
(45) Date of publication and mention of the grant of the patent: **18.03.2015**
(21) Application number: 11823505.0
(22) Date of filing: 05.09.2011
(51) Int. Cl.: C09J 201/10, C08F 220/18, C09J 11/04, C09J 11/08, C09J 133/04, C09J 201/00, C09J 143/04, C09J 171/02

(54) **MOISTURE-CURABLE REACTIVE HOT-MELT ADHESIVE AGENT COMPOSITION**
FEUCHTIGKEITSHÄRTBARE REAKTIVE SCHMELZKLEBERZUSAMMENSETZUNG
COMPOSITION D'AGENT ADHÉSIF THERMOFUSIBLE RÉACTIF DURCISSABLE À L'HUMIDITÉ

(30) Priority: 09.09.2010 JP 2010202341
(43) Date of publication of application: 17.07.2013
(73) Proprietor: Kaneka Corporation, Osaka-shi, Osaka 530-8288 (JP)
(72) Inventor: FUJIMOTO, Toyohisa, Takasago-shi Hyogo 676-8688 (JP); MAIZURU, Nobuyoshi, Takasago-shi Hyogo 676-8688 (JP)
(74) Representative: Vossius & Partner
(86) International application number: PCT/JP2011/070097
(87) International publication number: WO 2012/033030

(56) References cited:
- WO-A2-01/94493
- JP-A- 2003 213 118
- JP-A- 2006 291 021
- JP-A- 2008 050 448
- JP-A- 2009 024 107
- JP-A- 2009 040 827

## Description

### TECHNICAL FIELD

The present invention relates to a moisture-curable reactive hot-melt adhesive composition which contains no vinyl chloride resin, which is excellent in adhesion to oily steel sheets and electroplated steel sheets, which effectively improves the production cycle, and which can be suitably used in vehicle applications.

### BACKGROUND ART

Polyvinyl chloride plastisol compositions are widely used for wall paper and flooring materials for buildings, and for under-body coating materials and sealing materials for vehicles. Recent environmental and recycling issues, however, have raised a demand for alternatives which produce less toxic substances upon burning. In this context, Patent Literatures 1 to 4 each disclose an alternative composition to polyvinyl chloride plastisol compositions which contains a reactive silyl group-containing oxyalkylene polymer, and teach that the composition with the polymer, when used in vehicle applications, is curable at ambient temperature and provides rust prevention and vibration isolation.

As disclosed in Patent Literatures 5 and 6, compositions used in vehicle applications may be required to have adhesion to oily steel sheets with rust-proof oil attached thereto, in addition to adhesion to electroplated steel sheets. The compositions containing a reactive silyl group-containing oxyalkylene polymer, however, have the problem of insufficient adhesion especially to these oily steel sheets.

To solve the problem, Patent Literature 7 discloses a curable composition that contains a reactive silyl group-containing oxyalkylene polymer and has improved adhesion to oily surfaces. The composition disclosed in Patent Literature 7, however, cures slowly to consume much time until the practical strength is achieved, which is not sufficiently suitable for the production cycle in vehicle production lines.

Patent Literature 8 and 9 disclose a moisture-curable reactive hot-melt adhesive composition comprising polymers containing a reactive silyl groups. The patent documents do not make any reference to the use of the adhesive composition in oily steel sheets.

Patent Literature 10 discloses a reinforcing sheet comprising a layer of a solid thermosetting adhesive, which adheres well to oily steel surfaces, wherein the thermosetting adhesive includes a curing agent and an epoxy-terminated adduct of an epoxy resin and a conjugated diene or conjugated diene/nitrile rubber.

### CITATION LIST

### PATENT LITERATURE

Patent Literature 1: JP H04-154876 A
Patent Literature 2: JP H05-32934 A
Patent Literature 3: JP H05-86325 A
Patent Literature 4: JP 2001-11383 A
Patent Literature 5: JP H03-140321 A
Patent Literature 6: JP H05-70651 A
Patent Literature 7: JP 2003-213118 A
Patent Literature 8: JP 2009 024107 A
Patent Literature 9: JP 2006 291021 A
Patent Literature 10: WO 01/94493 A2

### SUMMARY OF INVENTION

### TECHNICAL PROBLEM

The present invention aims to provide a moisture-curable reactive hot-melt adhesive composition which contains no vinyl chloride resin, which is excellent in adhesion to oily steel sheets and electroplated steel sheets, which effectively improves the production cycle, and which can be suitably used in vehicle applications.

### SOLUTION TO PROBLEM

The present inventors made intensive studies for solving the problem and have found that a moisture-curable reactive hot-melt adhesive can solve the problem which includes an oxyalkylene polymer containing a reactive silyl group, an alkyl (meth) acrylate (co) polymer, a tackifying resin, and a specific inorganic filler in combination. The present invention has thereby been completed.

Specifically, the present invention discloses the use of a moisture-curable reactive hot-melt adhesive composition as a hot-melt adhesive composition for oily steel sheets, said moisture-curable reactive hot-melt adhesive composition, comprising:
(A) an oxyalkylene polymer containing a reactive silyl group, represented by formula (1) below;
(B) an alkyl (meth)acrylate (co)polymer containing a reactive silyl group represented by formula (1) below;
(C) a tackifying resin; and
(D) an inorganic filler which is at least one selected from the group consisting of calcium carbonate, carbon black, and silica,
   the formula (1) being:

   -SiR¹₃₋ₐXₐ (1)

   wherein each R¹ independently represents at least one selected from the group consisting of a C₁₋₂₀ alkyl group, a C₆₋₂₀ aryl group, and a C₇₋₂₀ aralkyl group; X represents a hydroxy or hydrolyzable group; and a represents 1, 2, or 3; and wherein the moisture-curable reactive hot-melt adhesive composition contains no vinyl chloride resin.

(2) the use of a moisture-curable reactive hot-melt adhesive composition according to (1),
   wherein the calcium carbonate (D) is calcium carbonate treated with a fatty acid or its salt, or with a resin acid or its salt,
(3) the use of a moisture-curable reactive hot-melt adhesive composition according to (1) or (2),
   wherein the calcium carbonate (D) is heavy calcium carbonate treated with a fatty acid or its salt, or with a resin acid or its salt,
(4) the use of a moisture-curable reactive hot-melt adhesive composition according to any one of (1) to (3),
   wherein the silica (D) is hydrophobic silica,

### ADVANTAGEOUS EFFECTS OF INVENTION

The present invention provides a moisture-curable reactive hot-melt adhesive composition which contains no vinyl chloride resin, which is excellent in adhesion to oily steel sheets and electroplated steel sheets, which effectively improves the production cycle, and which can be suitably used in vehicle applications.

### DESCRIPTION OF EMBODIMENTS

The moisture-curable reactive hot-melt adhesive according to the present invention essentially contains an oxyalkylene polymer (A) containing a reactive silyl group. The reactive silyl group herein refers to an organic group containing a hydroxy or hydrolyzable group bonded to a silicon atom.

The oxyalkylene polymer (A) containing a reactive silyl group is characterized by forming a siloxane bond to be crosslinked via a reaction that is accelerated by a silanol condensation catalyst.

The backbone skeleton of the oxyalkylene polymer (A) containing a reactive silyl group is not particularly limited and may be a conventionally known backbone skeleton.

The oxyalkylene polymer (A) contains a repeating unit represented by -R-O- in which R represents a divalent C₂₋₄ alkylene group.

The R is not particularly limited as long as it is a divalent C₂₋₄ alkylene group, and examples thereof include -CH₂-, -CH₂CH₂-, -CH(CH₃)CH₂-, -CH(C₂H₅)CH₂-, -CH₂CH₂CH₂CH₂-, and -C(CH₃)₂CH₂-. Especially, -CH (CH₃) CH₂- is preferred because of its easy availability. The oxyalkylene polymer may consist of a single repeating unit or different repeating units.

The oxyalkylene polymer may be a linear or branched polymer or a mixture thereof. Moreover, the backbone skeleton may contain a repeating unit other than the repeating unit -R-O-in which R represents a divalent C₂₋₄ alkylene group.

The proportion of repeating units other than the repeating unit -R-O- (R represents a divalent C₂₋₄ alkylene group) in the polymer is preferably not more than 80% by weight, and more preferably not more than 50% by weight. The proportion of repeating units represented by -R-O- (R represents a divalent C₂₋₄ alkylene group) in the polymer is preferably at least 50% by weight, and more preferably at least 80% by weight.

The method for producing the backbone skeleton of the oxyalkylene polymer is not particularly limited, and the following methods may be mentioned: (a1) a method in which a backbone skeleton is prepared by ring-opening polymerization of a monoepoxide such as ethylene oxide and propylene oxide in the presence of an initiator such as divalent alcohol, polyvalent alcohol, and various oligomers containing a hydroxy group, and a known catalyst such as alkali catalyst (e.g., KOH, NaOH), acid catalyst, and double metal cyanide complex catalyst (e.g., aluminoporphyrin metal complexes, cobalt zinc cyanide-glyme complex catalysts); and (a2) a method in which a backbone skeleton is prepared by a chain extension reaction of a hydroxy group-terminated polyether polymer with a bifunctional or polyfunctional alkyl halide such as CH₂Cl₂ and CH₂Br₂ in the presence of a basic compound such as KOH, NaOH, KOCH₃, and NaOCH₃, or by a chain extension reaction of a hydroxy group-terminated polyether polymer with a compound that has at least two isocyanate groups.

Among these methods, the method (a1) which involves ring-opening polymerization of a monoepoxide in the presence of a double metal cyanide complex catalyst is preferred because the resulting polymer has a narrow molecular weight distribution and low viscosity.

The oxyalkylene polymer (A) containing a reactive silyl group contains a reactive silyl group represented by the following formula (1) :

-SiR¹₃₋ₐXₐ (1)

wherein each R¹ independently represents at least one selected from the group consisting of a C₁₋₂₀ alkyl group, a C₆₋₂₀ aryl group, and a C₇₋₂₀ aralkyl group; X represents a hydroxy or hydrolyzable group; and a represents 1, 2, or 3.

The hydrolyzable group represented by X in formula (1) is not particularly limited and may be a conventionally known hydrolyzable group such as a hydrogen atom, a halogen atom, an alkoxy group, an acyloxy group, a ketoxymate group, an amino group, an amide group, an aminooxy group, and a mercapto group. Among these, alkoxy groups such as a methoxy group, an ethoxy group, a propoxy group, and an isopropoxy group are preferred because of their moderate hydrolyzability and easy workability. The hydroxy or hydrolyzable groups present in the reactive silyl group may be the same as or different from each other. The number of silicon atoms in the reactive silyl group may be one or may be two or more. The number may be about 20 in the case of the reactive silyl group in which silicon atoms are bonded to each other by a siloxane bond or the like.

Specific examples of the reactive silyl group represented by formula (1) include a dimethoxymethylsilyl group, a diethoxymethylsilyl group, a diisopropoxymethylsilyl group, a trimethoxysilyl group, a triethoxysilyl group, and a triisopropoxysilyl group. Among these, a dimethoxymethylsilyl group, a trimethoxysilyl group, and a triethoxysilyl group are preferred because they are highly active and provide favorable curability. Further, a dimethoxymethylsilyl group is most preferred because it is less likely to form a gel when molten at high temperatures in the atmosphere.

The number of reactive silyl groups in each oxyalkylene polymer (A) is preferably at least 0.8, more preferably 0.8 to 3, and further preferably 0.8 to 2.0, on average. When the number of reactive silyl groups per molecule of the polymer is 0.8 to 2.0 on average, the balance between the curability and the crosslinked structure is fine and the resulting cured product has good adhesion and mechanical properties.

The reactive silyl group may be located at a molecular chain end or inside of the oxyalkylene polymer (A). The reactive silyl group is preferably located at a molecular chain end since the resulting cured product is likely to have favorable mechanical properties.

The method for introducing the reactive silyl group into an organic polymer is not particularly limited, and various methods are employable.

For example, the following methods may be employed.
(i) An organic polymer containing a functional group such as a hydroxy group, an epoxy group, and an isocyanate group in the molecule is reacted with a compound containing a functional group reactive with the former functional group and a reactive silyl group.
(ii) An organic polymer containing a functional group such as a hydroxy group in the molecule is reacted with an organic compound containing an active group that is reactive with the functional group and an unsaturated group to prepare an organic polymer containing an unsaturated group. Or alternatively, in a polymerization reaction, a monomer containing an unsaturated group that will not be involved in the polymerization reaction is copolymerized to prepare an organic polymer containing an unsaturated group; for example, in the case that ring-opening polymerization of, for example, an epoxide is carried out to prepare an organic polymer, an epoxide containing an unsaturated group is ring-opening copolymerized to prepare an unsaturated group-containing organic polymer. Then, the reactive product thus obtained is reacted with a hydrosilane containing a reactive silyl group to be hydrosilylated.
(iii) An organic polymer containing an unsaturated group, which is prepared in the same manner as in the methods (ii), is reacted with a compound containing a mercapto group and a reactive silyl group.

Among the methods (i), preferred are a method in which a hydroxy group-terminated polymer is reacted with a compound containing an isocyanate group and a reactive silyl group and a method in which an isocyanate group-terminated polymer is reacted with a compound containing an amino group and a reactive silyl group, because a high addition rate can be achieved in a relatively short reaction time. The oxyalkylene polymers obtained by such reactions are polymers containing a reactive silyl group and a group represented by the following formula (2) :

-NR²-C(=O)- (2)

wherein R² represents at least one selected from the group consisting of a hydrogen atom, a C₁₋₂₀ alkyl group , a C₆₋₂₀ aryl group, and a C₇₋₂₀ aralkyl group.

The oxyalkylene polymer (A) containing the group represented by formula (2) can be prepared in a different manner than described above. For example, it may be prepared by a chain extension reaction of a diisocyanate compound such as aromatic isocyanates (e.g., toluene (tolylene) diisocyanate, diphenylmethane diisocyanate, xylylene diisocyanate) and aliphatic isocyanates (e.g., isophorone diisocyanate, hexamethylene diisocyanate) with a polyol containing the repeating unit -R-O- in which R represents a divalent C₂₋₄ alkylene group. The polymer thus obtained contains the group represented by formula (2) regardless of what manner the reactive silyl group is introduced.

For example, a method as disclosed in JP H03-47825 A, though not limited thereto, may be mentioned as the synthesis method (i) in which a hydroxy group-terminated polymer is reacted with a compound containing an isocyanate group and a reactive silyl group. Specific examples of the compound containing an isocyanate group and a reactive silyl group include, but not limited to, γ-isocyanatopropyltrimethoxysilane, γ-isocyanatopropyltriethoxysilane, γ-isocyanatopropylmethyldimethoxysilane, and γ-isocyanatopropylmethyldiethoxysilane. The method in which an isocyanate group-terminated polymer is reacted with a compound containing an amino group and a reactive silyl group is not particularly limited, and a conventionally known method may be employed. Specific examples of the compound containing an amino group and a reactive silyl group include, but not limited to, N-(β-aminoethyl)-γ-aminopropyltrimethoxysilane, N-(γ-aminoethyl)-γ-aminopropyltriethoxysilane, γ-aminopropyltrimethoxysilane, γ-aminopropyltriethoxysilane, γ-phenylaminopropyltrimethoxysilane, ureidopropyltriethoxysilane, N-(β-aminoethyl)-γ-aminopropylmethyldimethoxysilane, and γ-aminopropylmethyldiethoxysilane.

In terms of introducing the reactive silyl group at a high introduction ratio, preferred among the methods (ii) is a method in which an organic polymer containing an unsaturated group represented by formula (3) below is reacted with a hydrosilane compound in the presence of a group 8 transition metal catalyst. Examples of the group 8 transition metal catalyst include H₂PtCl₆·H₂O, platinum-vinylsiloxane complexes, and platinum-olefin complexes.

-O-R⁴-CR³=CH₂ (3)

(in the formula, R³ represents a hydrogen atom or a C₁₋₁₀ alkyl group, and R⁴ represents a C₀₋₂₀ alkylene group).

The R³ in formula (3) is more preferably hydrogen or a methyl group. Specific examples of the hydrosilane compound include, but not limited to: halogenated silanes such as trichlorosilane, methyldichlorosilane, dimethylchlorosilane, and phenyldichlorosilane; alkoxysilanes such as trimethoxysilane, triethoxysilane, methyldimethoxysilane, methyldiethoxysilane, and phenyldimethoxysilane; acyloxysilanes such as methyldiacetoxysilane and phenyldiacetoxysilane; and ketoxymate silanes such as bis(dimethylketoxymate)methylsilane and bis(cyclohexylketoxymate)methylsilane. In particular, alkoxysilanes are preferred among these because the resulting composition is moderately hydrolyzed and is easy to handle.

Examples of the synthesis methods (iii) include, but not limited to, a method in which a compound containing a mercapto group and a reactive silyl group is introduced into an unsaturated bond moiety of an organic polymer by a radical addition reaction in the presence of a radical initiator and/or a radical source. Specific examples of the compound containing a mercapto group and a reactive silyl group include, but not limited to, γ-mercaptopropyltrimethoxysilane, γ-mercaptopropyltriethoxysilane, γ-mercaptopropylmethyldimethoxysilane, and γ-mercaptopropylmethyldiethoxysilane.

Among the methods mentioned above, since the polymers obtained by the methods (iii) have a strong odor due to mercaptosilane, the methods (i) and (ii) are preferred. The methods (i) and (ii) each have its own merits and demerits. The methods (ii) are preferred because the polyoxyalkylene polymers containing a reactive silyl group obtained by the methods (ii) are formed into compositions having lower viscosity and better workability than those containing the polymers obtained by the methods (i), and because they do not contain any organic group that reduces the heat resistance such as a urethane bond and a urea bond and do not need a compound containing an isocyanate group that has the problem of toxicity. On the other hand, the methods (i) are preferred in that the introduction of a silyl group into a polymer can be carried out inexpensively and highly productively. Here, each of the oxyalkylene polymers obtained by the methods (i), (ii), and (iii) may be used alone, or two or more kinds of them may be used in admixture.

The number average molecular weight (Mn) of the oxyalkylene polymer (A), determined by gel permeation chromatography (GPC) relative to polystyrene standards, is preferably 10, 000 to 100, 000, more preferably 10, 000 to 45, 000, and particularly preferably 15,000 to 30,000, because such polymers have excellent workability and provide an excellent balance of properties such as adhesion and mechanical properties.

The ratio (Mw/Mn) between the weight average molecular weight (Mw) and the number average molecular weight (Mn) is, though not limited to, preferably 2.0 or less, and more preferably 1.6 or less. The ratio is particularly preferably 1.4 or less because then the viscosity is lowered to improve the workability.

The molecular weight distribution can be determined by various methods, and is generally determined by gel permeation chromatography (GPC).

The moisture-curable reactive hot-melt adhesive according to the present invention essentially contains an alkyl (meth)acrylate (co)polymer (B).

The alkyl (meth)acrylate (co)polymer (B) (hereinafter, also referred to as (co) polymer (B)) refers to a polymer that consists of a single alkyl (meth)acrylate compound as the repeating unit, a copolymer that consists of different alkyl (meth)acrylate compounds as the repeating units, and a copolymer that consists of one or more alkyl (meth)acrylate compounds as the repeating unit(s) and at least one compound copolymerizable therewith. The term "alkyl (meth) acrylate" as used herein and hereinafter refers to an alkyl acrylate and/or an alkyl methacrylate.

The alkyl (meth) acrylate compound used as the repeating unit is not particularly limited and may be a conventionally known one. Examples thereof include methyl acrylate, ethyl acrylate, n-propyl acrylate, n-butyl acrylate, isobutyl acrylate, tert-butyl acrylate, n-hexyl acrylate, 2-ethylhexyl acrylate, decyl acrylate, undecyl acrylate, lauryl acrylate, tridecyl acrylate, myristyl acrylate, cetyl acrylate, stearyl acrylate, behenyl acrylate, and biphenyl acrylate.

The methacrylate compound is not particularly limited and may be a conventionally known one such as methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, decyl methacrylate, undecyl methacrylate, lauryl methacrylate, tridecyl methacrylate, myristyl methacrylate, cetyl methacrylate, stearyl methacrylate, behenyl methacrylate, and biphenyl methacrylate.

The backbone skeleton of the alkyl (meth)acrylate (co) polymer (B) is formed substantially from one or two or more alkyl (meth)acrylate compounds. The phrase "formed substantially from the compound(s)" means that the proportion of repeating units derived from the alkyl (meth)acrylate compound(s) in the (co)polymer (B) is higher than 50%. The proportion of repeating units derived from the alkyl (meth) acrylate compound (s) in the (co) polymer (B) is preferably not lower than 70%.

In terms of the compatibility and stability, preferred are copolymers having a molecular chain that is formed substantially from (b-1) an alkyl (meth)acrylate compound containing a C₁₋₈ alkyl group and (b-2) an alkyl (meth) acrylate compound containing an alkyl group with a carbon number of 10 or more (hereinafter, also referred to as (co)polymer (B)-a) among the alkyl (meth)acrylate compounds.

In the (co)polymer (B)-a, the alkyl (meth)acrylate compound (b-1) containing a C₁₋₈ alkyl group is represented by the following formula (4):

CH₂=C (R⁵) COOR⁶ (4)

wherein R⁵ represents a hydrogen atom or a methyl group, and R⁶ represents a C₁₋₆ alkyl group.

The R⁶ in formula (4) is not particularly limited, and examples thereof include C₁₋₈, preferably C₁₋₄, and more preferably C₁₋₂ alkyl groups such as methyl, ethyl, propyl, n-butyl, t-butyl, and 2-ethylhexyl groups.

The R⁶ in the (co) polymer (B) -a is not necessarily limited to a single alkyl group.

In the (co)polymer (B)-a, the alkyl (meth)acrylate compound (b-2) containing an alkyl group with a carbon number of 10 or more is a compound represented by the following formula (5) :

CH₂=C (R⁵) COOR⁷ (5)

wherein R⁵ is defined as in formula (4), and R⁷ represents an alkyl group with a carbon number of 10 or more.

The R⁷ in formula (5) is not particularly limited, and examples thereof include long-chain alkyl groups having a carbon number of 10 or more, typically 10 to 30, and preferably 10 to 20, such as lauryl, tridecyl, cetyl, stearyl, C₂₂ alkyl, and biphenyl groups. The R⁷ in the (co)polymer (B)-a is not necessarily limited to a single alkyl group.

The molecular chain of the (co)polymer (B)-a is formed substantially from the compounds (b-1) and (b-2). The phrase "formed substantially from the compounds (b-1) and (b-2) "means that the proportion of repeating units derived from the compounds (b-1) and (b-2) in the (co)polymer (B)-a is higher than 50%.

The proportion of repeating units derived from the compounds (b-1) and (b-2) in the (co)polymer (B) -a is preferably not lower than 70%. If the proportion of repeating units derived from the compounds (b-1) and (b-2) in the (co)polymer (B)-a is lower than 50%, the compatibility between the oxyalkylene polymer (A) containing a reactive silyl group and the (co)polymer (B)-a tends to be lowered to cause white turbidity, resulting in reduced adhesiveness of the resulting cured product.

The ratio of the repeating units derived from the compounds (b-1) and (b-2) (units from (b-1) : units from (b-2)) in the (co)polymer (B)-a is preferably 95:5 to 40:60, and more preferably 90:10 to 60:40 by weight. The ratio larger than 95:5 tends to lead to reduced compatibility, whereas the ratio smaller than 40: 60 tends to have disadvantages in terms of cost.

The (co)polymer (B) may further contain, in addition to the repeating unit derived from the alkyl (meth)acrylate compound, a repeating unit derived from a compound copolymerizable therewith. The compound copolymerizable with the alkyl (meth) acrylate compound is not particularly limited, and examples thereof include acrylic acids such as acrylic acid and methacrylic acid; compounds containing an amide group such as acrylamide, methacrylamide, N-methylol acrylamide, and N-methylol methacrylamide, compounds containing an epoxy group such as glycidyl acrylate and glycidyl methacrylate, and compounds containing an amino group such as diethylaminoethyl acrylate, diethylaminoethyl methacrylate, and aminoethyl vinyl ether; and other compounds such as acrylonitrile, styrene, α-methylstyrene, alkyl vinyl ethers, vinyl chloride, vinyl acetate, vinyl propionate, ethylene, and derivatives thereof.

The molecular weight of the (co)polymer (B) is not particularly limited. The number average molecular weight determined by GPC relative to polystyrene standards is preferably 500 to 100,000, more preferably 1,000 to 50,000, and particularly preferably 2,000 to 20,000, because such a (co)polymer (B) has easy workability and excellent adhesiveness.

The method for producing the (co)polymer (B) is not particularly limited, and exemplary methods include conventional vinyl polymerization methods (e.g., solution polymerization and bulk polymerization by radical reactions) . The reaction is typically carried out at 50 to 150°C after the compound(s) and additives such as a radical initiator, a chain transfer agent, and a solvent are added.

Examples of the radical initiator include azobisisobutyronitrile and benzoyl peroxide. Examples of the chain transfer agent include mercaptans such as n-dodecyl mercaptan, t-dodecyl mercaptan, and lauryl mercaptan, and halogen-containing compounds. The solvent used may preferably be a nonreactive solvent such as ethers, hydrocarbons, and esters.

The (co) polymer (B) contains a reactive silyl group represented by the following formula (1):

-SiR¹₃₋ₐXₐ (1)

wherein each R¹ independently represents at least one selected from the group consisting of a C₁₋₂₀ alkyl group, a C₆₋₂₀ aryl group, and a C₇₋₂₀ aralkyl group; X represents a hydroxy or hydrolyzable group; and a represents 1, 2, or 3, since the resulting cured product has excellent adhesion and heat resistance.

Specific examples of the reactive silyl group represented by formula (1) include dimethoxymethylsilyl, diethoxymethylsilyl, diisopropoxymethylsilyl, trimethoxysilyl, triethoxysilyl, and triisopropoxysilyl groups. Among these, dimethoxymethylsilyl, trimethoxysilyl, and triethoxysilyl groups are preferred because they are highly active and provide fine curability. Further, a dimethoxymethylsilyl group is most preferred because it is less likely to form a gel when molten at high temperatures in the atmosphere.

The method for introducing a reactive silyl group into the (co)polymer (B) is not particularly limited and various methods may be employed. For example, the following methods may be mentioned:
(iv) a compound containing a polymerizable unsaturated bond and a reactive silyl group is copolymerized with the compounds (b-1) and (b-2);
(v) a compound containing a polymerizable unsaturated bond and a reactive functional group (hereinafter, referred to as Y' group) (e.g., an acrylic acid) is copolymerized with the compounds (b-1) and (b-2), and the produced copolymer is reacted with a compound containing a reactive silyl group and a functional group (hereinafter, referred to as Y" group) that is reactive with the Y' group (e.g., a compound containing an isocyanate group and a -Si(OCH₃) group);
(vi) the compounds (b-1) and (b-2) are copolymerized in the presence of a mercaptan containing a reactive silyl group as a chain transfer agent;
(vii) the compounds (b-1) and (b-2) are copolymerized in the presence of an azobisnitrile or disulfide compound containing a reactive silyl group as an initiator; and
(viii) the compounds (b-1) and (b-2) are polymerized by living radical polymerization and a reactive silyl group is then introduced into the molecular end.

The methods (iv) to (viii) may be employed in any combinations. For example, when the methods (iv) and (vi) are combined, a compound containing a polymerizable unsaturated bond and a reactive silyl group may be copolymerized with the compounds (b-1) and (b-2) in the presence of a mercaptan containing a reactive silyl group as a chain transfer agent.

The compound containing a polymerizable unsaturated bond and a reactive silyl group in the method (iv) is not particularly limited, and examples thereof include:
γ-methacryloxypropylalkylpolyalkoxysilanes such as
γ-methacryloxypropyltrimethoxysilane,
γ-methacryloxypropylmethyldimethoxysilane, and
γ-methacryloxypropyltriethoxysilane;
γ-acryloxypropylalkylpolyalkoxysilanes such as
γ-acryloxypropyltrimethoxysilane,
γ-acryloxypropylmethyldimethoxysilane, and
γ-acryloxypropyltriethoxysilane; and
vinylalkylpolyalkoxysilanes such as vinyltrimethoxysilane, vinylmethyldimethoxysilane, and vinyltriethoxysilane.

Various combinations of the Y' and Y" groups in the method (v) are employable, and examples thereof include combinations of an amino, hydroxy, or carboxylic acid group as the Y' group and an isocyanate group as the Y" group.

Other examples include a combination of an allyl group as the Y' group and a silicon hydride group (H-Si) as the Y" group as disclosed in JP S62-70405 A, JP H09-272714 A, and JP S59-168014 A. In this case, the Y' group and the Y" group can be bonded by hydrosilylation in the presence of a group VIII transition metal.

Examples of the mercaptan containing a reactive silyl group used as a chain transfer agent in the method (vi) include γ-mercaptopropyltrimethoxysilane, γ-mercaptopropylmethyldimethoxysilane, and γ-mercaptopropyltriethoxysilane. As disclosed in JP S60-228516A, the compounds (b-1) and (b-2) may be copolymerized in the presence of a bifunctional radical-polymerizable compound and a mercaptan containing an alkoxysilyl group as a chain transfer agent.

Examples of the azobisnitrile or disulfide compound containing a reactive silyl group in the method (vii) include azobisnitrile compounds containing an alkoxysilyl group and disulfide compounds containing an alkoxysilyl group as disclosed in JP S60-23405 A and JP S62-70405 A.

Examples of the method (viii) include the method disclosed in JP H09-272714 A.

Other examples include a method in which a mercaptan containing a reactive silyl group and a radical polymerization initiator containing a reactive silyl group are used in combination as disclosed in JP S59-168014 A and JP S60-228516 A.

The number of reactive silyl groups in the (co)polymer (B) is not particularly limited, and is preferably at least 0.1 but not more than 4.0, and more preferably at least 0.5 but not more than 2.0, on average per molecule of the (co)polymer (B) from the viewpoint of the effect on adhesion force and cost.

The blend ratio between the oxyalkylene polymer (A) containing a reactive silyl group and the (co)polymer (B) in the composition of the present invention is preferably of 20 to 80 parts by weight of the component (A) to 80 to 20 parts by weight of the component (B), based on 100 parts by weight in total of the components (A) and (B). The ratio is more preferably of 40 to 60 parts by weight of the component (A) to 60 to 40 parts by weight of the component (B). If the amount of the (co)polymer (B) is less than 20 parts by weight, the resulting cured product tends to have lower adhesion to a base material. If the amount of the (co)polymer (B) is more than 80 parts by weight, the resulting cured product tends to be brittle, failing to achieve favorable adhesion and durability.

The moisture-curable reactive hot-melt adhesive composition of the present invention essentially contains a tackifying resin as a component (C).

The tackifying resin (C) used in the present invention is not particularly limited and may be a commonly used one. Specific examples thereof include terpene resins, aromatic modified terpene resins and hydrogenated terpene resins obtained by hydrogenation thereof, terpene-phenol resins obtained by copolymerizing terpenes with phenols, phenolic resins, modified phenolic resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, petroleum resins (e.g., C5 hydrocarbon resins, C9 hydrocarbon resins, C5C9 hydrocarbon copolymer resins), hydrogenated petroleum resins, and DCPD resins. Each of these may be used alone, or two or more of these may be used in combination.

The styrene block copolymers and hydrogenation products thereof are not particularly limited, and examples thereof include styrene-butadiene-styrene block copolymers (SBS), styrene-isoprene-styrene block copolymers (SIS), styrene-ethylene/butylene-styrene block copolymers (SEBS), styrene-ethylene/propylene-styrene block copolymers (SEPS), and styrene-isobutylene-styrene block copolymers (SIBS).

The tackifying resin (C) is added for the purpose of lowering the melting point during heating so as to provide favorable coating properties, securing the compatibility between the oxyalkylene polymer (A) and the (co) polymer (B) and also securing the adhesion to various base materials.

The amount of the tackifying resin (C) used is preferably 10 to 100 parts by weight, more preferably 20 to 90 parts by weight, and still more preferably 30 to 80 parts by weight, relative to 100 parts by weight in total of the oxyalkylene polymer (A) and the (co) polymer (B). If the amount used is less than 10 parts by weight, the curable composition tends to have a high melt viscosity, failing to have fine workability. In addition, the resulting cured product tends to have reduced adhesion to a base material. Conversely, if the amount used is more than 100 parts by weight, the heat-resistant adhesion tends to be reduced and the curing rate tends to be slower.

The moisture-curable reactive hot-melt adhesive composition of the present invention essentially contains at least one inorganic filler selected from the group consisting of calcium carbonate, carbon black, and silica as a component (D) .

The calcium carbonate is not particularly limited and may be a conventionally known one such as heavy calcium carbonate and colloidal calcium carbonate. Especially calcium carbonate treated with a fatty acid or its salt, or with a resin acid or its salt is preferably used because then the adhesion to oily steel sheets is likely to be fine. Moreover, heavy calcium carbonate is preferred because the moisture-curable reactive hot-melt adhesive according to the present invention, when heated to be molten, has a low viscosity.

The amount of calcium carbonate used is preferably in the range of 1 to 500 parts by weight, more preferably 10 to 300 parts by weight, still more preferably 50 to 300 parts by weight, and particularly preferably 100 to 300 parts by weight, relative to 100 parts by weight in total ((A)+(B)) of the oxyalkylene polymer (A) containing a reactive silyl group and the (co)polymer (B). If the amount used is less than 1 part by weight, the adhesion to oily surfaces tends not to be sufficiently affected. If the amount used is more than 300 parts by weight, the viscosity tends to be too high, making it difficult to handle.

The silica is not particularly limited and may be selected from a wide range of conventionally known ones. Among these, preferred are hydrophobic silicas obtained by surface-treating silica particles with various treating agents since then the adhesion to oily steel sheets is particularly improved. Specific examples of the surface treating agents include dimethyldichlorosilane, silicone oil, hexamethyldisilazane, octylsilane, hexadecylsilane, aminosilane, methacrylsilane, octamethylcyclotetrasiloxane, and polydimethylsiloxane. More specifically, exemplary trade names of such agents include AEROSIL DT4, AEROSIL NA200Y, AEROSIL NA50H, AEROSIL NA50Y, AEROSIL NAX50, AEROSIL R104, AEROSIL R106, AEROSIL R202, AEROSIL R202W90, AEROSIL R504, AEROSIL R711, AEROSIL R700, AEROSIL R7200, AEROSIL R805, AEROSIL R805VV90, AEROSIL R812, AEROSIL R812S, AEROSIL R816, AEROSIL R8200, AEROSIL R972, AEROSIL R972V, AEROSIL R974, AEROSIL RA200HS, AEROSIL RX200, AEROSIL RX300, AEROSIL RX50, AEROSIL RY200, AEROSIL RY200S, AEROSIL RY300, and AEROSIL RY50.

The amount of silica used is preferably in the range of 1 to 50 parts by weight, and more preferably 5 to 40 parts by weight, relative to 100 parts by weight in total ((A)+(B)) of the oxyalkylene polymer (A) containing a reactive silyl group and the (co) polymer (B) . If the amount used is less than 1 part by weight, the adhesion to oily surfaces tends not to be sufficiently affected. If the amount used is more than 50 parts by weight, the viscosity tends to be too high, making it difficult to handle.

The carbon black is not particularly limited and may be selected from a wide range of conventionally known ones such as channel black, furnace black, thermal black, lamp black, and acetylene black.

The amount of carbon black used is preferably in the range of 1 to 50 parts by weight, more preferably 5 to 40 parts by weight, and still more preferably 10 to 40 parts by weight, relative to 100 parts by weight in total ((A)+(B)) of the oxyalkylene polymer (A) containing a reactive silyl group and the (co)polymer (B). If the amount used is less than 1 part by weight, the adhesion to oily surfaces tends not to be sufficiently affected. If the amount used is more than 50 parts by weight, the viscosity tends to be too high, making it difficult to handle.

The moisture-curable reactive hot-melt adhesive composition of the present invention may preferably contain a curing catalyst. The curing catalyst is not particularly limited and may be a commonly used silanol condensation catalyst that promotes the reaction of a reactive silyl group. Examples thereof include: titanium compounds such as tetrabutyl titanate, tetrapropyl titanate, titanium tetraacetylacetonate, and diisopropoxytitanium bis(acetylacetonate); tetravalent organotin compounds such as dibutyltin dilaurate, dibutyltin maleate, dibutyltin phthalate, dibutyltin dioctoate, dibutyltin diethylhexanoate, dibutyltin dimethylmaleate, dibutyltin diethylmaleate, dibutyltin dibutylmaleate, dibutyltin dioctylmaleate, dibutyltin ditridecylmaleate, dibutyltin dibenzylmaleate, dibutyltin diacetate, dioctyltin diethylmaleate, dioctyltin dioctylmaleate, dibutyltin dimethoxide, dibutyltin dinonylphenoxide, dibutenyltin oxide, dibutyltin diacetylacetonate, dibutyltin diethylacetoacetonate, reaction products of dibutyltin oxide and a silicate compound, and reaction products of dibutyltin oxide and a phthalate; and organoaluminum compounds such as aluminum tris-acetylacetonate, aluminum tris-ethylacetoacetate, and diisopropoxyaluminum ethylacetoacetate; and zirconium compounds such as zirconium tetraacetylacetonate.

In addition to these compounds, other examples include amine compounds, acidic phosphates, reaction products of an acidic phosphate and an amine compound, saturated or unsaturated polyvalent carboxylic acids and their acid anhydrides, reaction products (e.g. salts) of a carboxylic acid compound and an amine compound, and lead octylate.

Examples of the amine compounds include, but not limited to: aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as aniline, laurylaniline, stearylaniline, and triphenylamine; nitrogen-containing heterocyclic compounds such as pyridine, 2-aminopyridine, 2-(dimethylamino)pyridine, 4-(dimethylaminopyridine), 2-hydroxypyridine, imidazole, 2-ethyl-4-methylimidazole, morpholine, N-methylmorpholine, piperidine, 2-piperidine methanol, 2-(2-piperidino)ethanol, piperidone, 1,2-dimethyl-1,4,5,6-tetrahydropyrimidine, 1,8-diazabicyclo(5,4,0)undecene-7 (DBU), 6-(dibutylamino)-1,8-diazabicyclo(5,4,0)undecene-7 (DBA-DBU), 1,5-diazabicyclo(4,3,0)nonene-5 (DBN), 1,4-diazabicyclo(2,2,2)octane (DABCO), and aziridine, and other amines such as monoethanolamine, diethanolamine, triethanolamine, 3-hydroxypropylamine, ethylenediamine, propylenediamine, hexamethylenediamine, N-methyl-1,3-propanediamine, N,N'-dimethyl-1,3-propanediamine, diethylenetriamine, triethylenetetramine, 2-(2-aminoethylamino)ethanol, benzylamine, 3-methoxypropylamine, 3-lauryloxypropylamine, 3-dimethylaminopropylamine, 3-diethylaminopropylamine, 3-dibutylaminopropylamine, 3-morpholinopropylamine, 2-(1-piperazinyl)ethylamine, xylylenediamine, and 2,4,6-tris(dimethylaminomethyl)phenol; guanidines such as guanidine, phenylguanidine, and diphenylguanidine; and biguanides such as butylbiguanide, 1-o-tolylbiguanide, and 1-phenylbiguanide.

Among these, preferred are amidines such as 1,2-dimethyl-1,4,5,6-tetrahydropyrimidine, DBU, DBA-DBU, and DBN; guanidines such as guanidine, phenylguanidine, and diphenylguanidine; and biguanides such as butylbiguanide, 1-o-tolylbiguanide, and 1-phenylbiguanide because of their high activity. Further, aryl-substituted biguanides such as 1-o-tolylbiguanide and 1-phenylbiguanide are preferred because then high adhesion can be expected.

Amine compounds are basic. Here, amine compounds whose conjugate acids have a pKa value of not smaller than 11 have high catalytic activity and are thus preferred. Amine compounds such as 1,2-dimethyl-1,4,5,6-tetrahydropyrimidine, DBU, and DBN, whose conjugate acids have a pKa value of not smaller than 12, have high catalytic activity and are thus particularly preferred.

The carboxylic acids are not particularly limited, and examples thereof include: linear saturated fatty acids such as acetic acid, propionic acid, butyric acid, valeric acid, caproic acid, enanthic acid, caprylic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monoene unsaturated fatty acids such as undecylenic acid, linderic acid, tsuzuic acid, physeteric acid, myristoleic acid, 2-hexadecenic acid, 6-hexadecenic acid, 7-hexadecenic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequeic acid, acrylic acid, methacrylic acid, angelic acid, crotonic acid, isocrotonic acid, and 10-undecenic acid; polyene unsaturated fatty acids such as linoelaidic acid, linoleic acid, 10,12-octadecadienic acid, hiragonic acid, α-eleostearic acid, β-eleostearic acid, punicic acid, linolenic acid, 8,1,1,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 2-methylbutyric acid, isobutyric acid, 2-ethylbutyric acid, pivalic acid, 2,2-dimethylbutyric acid, 2-ethyl-2-methylbutyric acid, 2,2-diethylbutyric acid, 2-phenylbutyric acid, isovaleric acid, 2,2-dimethylvaleric acid, 2-ethyl-2-methylvaleric acid, 2,2-diethylvaleric acid, 2-ethylhexanoic acid, 2,2-dimethylhexanoic acid, 2,2-diethylhexanoic acid, 2,2-dimethyloctanoic acid, 2-ethyl-2,5-dimethylhexanoic acid, versatic acid, neodecanoic acid, and tuberculostearic acid; triple bond-containing fatty acids such as propiolic acid, tariric acid, stearolic acid, crepenynic acid, ximenynic acid, and 7-hexadecynoic acid; alicyclic carboxylic acids such as naphthenic acid, malvalic acid, sterculic acid, hydnocarpus acid, chaulmoogric acid, gorlic acid, 1-methylcyclopentanecarboxylic acid, 1-methylcyclohexanecarboxylic acid, 1-adamantanecarboxylic acid, bicyclo[2.2.2]octane-1-carboxylic acid, and bicyclo[2.2.1]heptane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jalapinolic acid, juniperic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, 2,2-dimethyl-3-hydroxypropionic acid, ricinoleic acid, camlolenic acid, licanic acid, ferronic acid, and cerebronic acid; and halogen-substituted monocarboxylic acids such as chloroacetic acid, 2-chloroacrylic acid, and chlorobenzoic acid. Exemplary aliphatic dicarboxylic acids include: acyclic dicarboxylic acids such as adipic acid, azelaic acid, pimelic acid, suberic acid, sebacic acid, glutaric acid, oxalic acid, malonic acid, ethylmalonic acid, dimethylmalonic acid, ethylmethylmalonic acid, diethylmalonic acid, succinic acid, 2,2-dimethylsuccinic acid, 2,2-diethylsuccinic acid, and 2,2-dimethylglutaric acid; saturated dicarboxylic acids such as 1,2,2-trimethyl-1,3-cyclopentanedicarboxylic acid and oxydiacetic acid; and unsaturated dicarboxylic acids such as maleic acid, fumaric acid, acetylenedicarboxylic acid, and itaconic acid. Exemplary aliphatic polycarboxylic acids include acyclic tricarboxylic acids such as aconitic acid, citric acid, isocitric acid, 3-methylisocitric acid, and 4,4-dimethylaconitic acid. Exemplary aromatic carboxylic acids include: aromatic monocarboxylic acids such as benzoic acid, 9-anthracenecarboxylic acid, atrolactic acid, anisic acid, isopropylbenzoic acid, salicylic acid, and toluic acid; and aromatic polycarboxylic acids such as phthalic acid, isophthalic acid, terephthalic acid, carboxyphenylacetic acid and pyromellitic acid. Other examples include amino acids such as alanine, leucine, threonine, asparagic acid, glutamic acid, arginine, cysteine, methionine, phenylalanine, tryptophane, and histidine. Also usable are carboxylic acid derivatives which can generate carboxylic acids via hydrolysis, such as carboxylic acid anhydrides, esters, amides, nitriles, and acyl chlorides.

The carboxylic acid used as a curing catalyst is preferably 2-ethylhexanoic acid, octylic acid, neodecanoic acid, oleic acid, naphthenic acid or the like because, for example, they are easily available at low cost and have fine compatibility with the oxyalkylene polymer (A) containing a reactive silyl group.

Two or more different curing catalysts may be used in combination. For example, a combination of an amine compound and a carboxylic acid is preferably used because it may enhance the curability.

The amount of the curing catalyst used is preferably 0.001 to 20 parts by weight, more preferably 0.01 to 15 parts by weight, and particularly preferably 0.1 to 10 parts by weight, relative to 100 parts by weight in total of the oxyalkylene polymer (A) containing a reactive silyl group and the alkyl (meth) acrylate (co)polymer (B). If the amount of the curing catalyst used is less than 0.001 parts by weight, the curing rate may not be enough and the curing reaction is less likely to proceed sufficiently. Conversely, if the amount of the curing catalyst used is more than 20 parts by weight, the curing rate tends to be so rapid that the curable composition may have a short usable time and therefore poor workability, and the storage stability also tends to be deteriorated.

The curable composition of the present invention may contain a silane coupling agent, a reaction product of a silane coupling agent, or a compound other than silane coupling agents as an adhesion promoter or a dehydrating agent. Specific examples of the silane coupling agent include: isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, α-isocyanatomethyltrimethoxysilane, and α-isocyanatomethyldimethoxymethylsilane; amino group-containing silanes such as γ-aminopropyltrimethoxysilane, γ-aminopropyltriethoxysilane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes such as γ-mercaptopropyltrimethoxysilane, γ-mercaptopropyltriethoxysilane, γ-mercaptpropylmethyldimethoxysilane, and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(β-methoxyethoxy)silane, and N-β-(carboxymethyl)aminoethyl-γ-aminopropyltrimethoxysilane ; vinyl unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; and isocyanurate silanes such as tris(trimethoxysilyl)isocyanurate. Also, derivatives obtained by modifying these, such as amino-modified silyl polymers, silylated amino polymers, unsaturated aminosilane complexes, phenylamino long-chain alkylsilanes, aminosilylated silicones, and silylated polyesters, can be used as silane coupling agents. The amount of the silane coupling agent used in the present invention is preferably in the range of 0.1 to 20 parts by weight, and particularly preferably in the range of 0.5 to 10 parts by weight, relative to 100 parts by weight in total of the oxyalkylene polymer (A) containing a reactive silyl group and the alkyl (meth) acrylate (co) polymer (B) .

The moisture-curable reactive hot-melt adhesive according to the present invention may optionally contain other fillers, plasticizers, and stabilizers and the like, in addition to the above-mentioned components.

Specific examples of other fillers include: inorganic fillers such as magnesium carbonate, titanium oxide, diatom earth, white clay, kaolin, clay, talc, wood flour, walnut shell flour, powdered chaff, silicic anhydride, quartz powder, aluminum powder, zinc powder, asbestos, glass fiber, carbon fiber, glass beads, alumina, glass balloons, shirasu balloons, silica balloons, calcium oxide, magnesium oxide, and silicon oxide; and wood fillers such as pulp and cotton chips; and organic fillers such as rubber powder, recycled rubber, fine powder of thermoplastic or thermosetting resins, and hollow bodies of polyethylene or the like. Among these, titanium oxide, kaolin, clay, and talc are preferred because, for example, the resulting moisture-curable reactive hot-melt adhesive has high initial cohesion and high initial adhesive strength, and also achieves favorable adhesion and heat resistance.

One of other fillers mentioned above may be added alone, or a plurality of these may be added in combination.

When other fillers are used, the amount used is necessarily 5 to 200 parts by weight, preferably 50 to 180 parts by weight, and most preferably 80 to 160 parts by weight, relative to 100 parts by weight in total of the oxyalkylene polymer (A) and the (co) polymer (B). If the amount used is more than 200 parts by weight, the viscosity tends to increase to reduce the workability. Conversely, if the amount used is less than 5 parts by weight, the obtained effect is not likely to be sufficient.

Specific examples of the plasticizers include: phthalates such as dioctyl phthalate and diisodecyl phthalate; aliphatic dibasic acid esters such as dioctyl adipate; epoxy plasticizers such as epoxidized soybean oil and epoxidized linseed oil; polyethers such as polypropylene glycol and its derivatives; and vinyl polymers obtained by polymerizing vinyl monomers by various methods. Each of these plasticizers may be used alone, or two or more of these may be used in combination.

The amount of the plasticizer used is preferably 5 to 100 parts by weight, and more preferably 10 to 70 parts by weight, relative to 100 parts by weight in total of the oxyalkylene polymer (A) and the (co) polymer (B). If the amount used is less than 5 parts by weight, the plasticizer fails to exert its effect. If the amount used is more than 100 parts by weight, the resulting cured product may have insufficient mechanical strength and the adhesive strength after application may be insufficient.

Specific examples of the stabilizers include antioxidants, light stabilizers, and ultraviolet absorbers.

Use of an antioxidant enhances the weather resistance and heat resistance of the cured product. Examples of the antioxidant include hindered phenol, monophenol, bisphenol, and polyphenol antioxidants. Especially hindered phenol antioxidants are preferred.

The amount of the antioxidant used is preferably 0.1 to 10 parts by weight, and more preferably 0.2 to 5 parts by weight, relative to 100 parts by weight in total of the oxyalkylene polymer (A) and the (co)polymer (B).

Use of a light stabilizer prevents photooxidative degradation of the cured product. Examples of the light stabilizer include benzotriazole, hidered amine, and benzoate compounds. Especially hindered amine compounds are preferred.

The amount of the light stabilizer used is preferably 0.1 to 10 parts by weight, and more preferably 0.2 to 5 parts by weight, relative to 100 parts by weight in total of the oxyalkylene polymer (A) and the (co)polymer (B).

Use of an ultraviolet absorber enhances the surface weather resistance of the cured product. Examples of the ultraviolet absorber include benzophenone, benzotriazole, salicylate, substituted tolyl, and metal chelate compounds. Especially benzotriazole compounds are preferred.

The amount of the ultraviolet absorber used is preferably 0.1 to 10 parts by weight, and more preferably 0.2 to 5 parts by weight, relative to 100 parts by weight in total of the oxyalkylene polymer (A) and the (co)polymer (B).

Combined use of a phenol or hindered phenol antioxidant, a hindered amine light stabilizer, and a benzotriazole ultraviolet absorber is preferred.

The moisture-curable reactive hot-melt adhesive according to the present invention may further contain various additives, as appropriate, for the purpose of adjusting various properties of the moisture-curable reactive hot-melt adhesive or its cured product. Examples of such additives include flame retardants, curability modifiers, radical inhibitors, metal deactivators, antiozonants, phosphorus peroxide decomposers, lubricants, pigments, blowing agents, solvents, and antifungal agents. Each of these additives may be used alone, or two or more of these may be used in combination.

The moisture-curable reactive hot-melt adhesive according to the present invention can be prepared as a one-pack adhesive which is prepared by preliminarily mixing all the components and storing the mixture in a hermetically closed vessel and after application is curable by moisture in the air. Alternatively, the moisture-curable reactive hot-melt adhesive according to the present invention can be prepared as a two-pack adhesive which separately includes a polymer composition and a mixture as curing agent that is prepared by mixing components including a curing catalyst, filler, plasticizer, and water, and is then used by mixing the two prior to application.

The method for preparing the moisture-curable reactive hot-melt adhesive to be applied by the application method used in the present invention is not particularly limited, and conventional methods may be employed such as a method in which the components mentioned above are mixed and kneaded with a mixer, roller, kneader or the like at ambient temperature or under heating, and a method in which the components are dissolved in a small amount of an appropriate solvent and mixed.

Containing a low-viscosity polymer, and a highly thermosensitive polymer and resin, the moisture-curable reactive hot-melt adhesive according to the present invention can be applied at relatively low temperatures compared with other hot-melt adhesives. For securing favorable workability, the adhesive is preferably heated to 60 to 180°C, more preferably to 70 to 160°C, and particularly preferably to 90 to 140°C, prior to application. If the application temperature is lower than 60°C, sufficient workability cannot be secured. Also, if the application temperature is higher than 180°C, then the moisture-curable reactive hot-melt adhesive has reduced stability, and its application is also limited because, for example, it cannot be applied to base materials with poor heat resistance. When the moisture-curable reactive hot-melt adhesive is heated before use, the heating method is not particularly limited and may be a conventionally known method.

The moisture-curable reactive hot-melt adhesive according to the present invention can be used as a reactive hot-melt adhesive in various applications and for bonding of base materials. Exemplary applications include, but not limited to, building, vehicle, electrical/electronic, and fiber/leather/clothing applications. Among these, the adhesive can be suitably used especially in vehicle applications. The composition of the present application is excellent in adhesion to oily surfaces, especially to oily steel sheets. Examples of the oily steel sheets include cold-rolled steel sheets, galvanized steel sheets, and aluminum alloys with oil (e.g. rust-proof oil or press oil) applied thereto. The method for applying the moisture-curable reactive hot-melt adhesive according to the present invention is not particularly limited and conventionally known methods, such as application using a roll coater or die coater, bead application, and spraying, may be employed.

### EXAMPLES

The moisture-curable reactive hot-melt adhesive according to the present invention is described referring to examples.

The present invention is specifically described referring to synthesis examples, production examples, and examples below. The present invention is not limited to these synthesis examples and examples.

Synthesis examples of the oxyalkylene polymer (A) containing a reactive silyl group are illustrated below.

### (Synthesis Example 1)

Propylene oxide was polymerized in the presence of polyoxypropylene diol having a number average molecular weight of 2,000 as an initiator and a zinc hexacyanocobaltate-glyme complex catalyst to produce a polyoxypropylene diol having a number average molecular weight of 29,000 (determined by GPC relative to polystyrene standards). The obtained polyoxypropylene diol was reacted with sodium methoxide, and then reacted with allyl chloride so that the terminal hydroxy group was converted to an unsaturated group.

The unsaturated group-terminated polyoxypropylene polymer was reacted with methyldimethoxysilane (0.75 mol per mol of unsaturated group) in the presence of a platinum-divinyldisiloxane complex to produce a reactive silyl group-containing oxyalkylene polymer (A-1) which had 1.5 methyldimethoxysilyl groups at the molecular ends, a number average molecular weight of 30,000 (determined by GPC relative to polystyrene standards), and a molecular weight distribution of 1.20.

### (Synthesis Example 2)

Propylene oxide was polymerized in the presence of polyoxypropylene diol having a number average molecular weight of 2,000 as an initiator and a zinc hexacyanocobaltate-glyme complex catalyst to produce a polyoxypropylene diol having a number average molecular weight of 29,000 (determined by GPC relative to polystyrene standards). Then, 0.7 mol of γ-isocyanatopropyltrimethoxysilane was added per mol of hydroxy group of the obtained polyoxypropylene diol to carry out a urethanization reaction to produce a reactive silyl group-containing oxyalkylene polymer (A-2) which had 1.4 trimethoxysilyl groups at the molecular ends, a number average molecular weight of 31,500 (determined by GPC relative to polystyrene standards), and a molecular weight distribution of 1.40.

Synthesis examples of the alkyl (meth)acrylate (co)polymer (B) are illustrated below.

### (Synthesis Example 3)

To toluene (40 g) heated to 105°C, a solution prepared by dissolving methyl methacrylate (67 g), butyl acrylate (5 g), stearyl methacrylate (15 g), 3-methacryloxypropylmethyldimethoxysilane (5 g), γ-mercaptopropylmethyldimethoxysilane (8 g), and the polymerization initiator 2,2'-azobisisobutyronitrile (3 g) in toluene (15g) was added dropwise over five hours. Then, the mixture was stirred for two hours. To the resulting mixture was added a solution prepared by dissolving 2,2'-azobisisobutyronitrile (0. 3 g) in toluene (10 g), and the mixture was stirred for two hours. In this manner, an acrylic copolymer (B-1) having two reactive silyl groups was obtained which had a solid content concentration of 60% by weight, a number average molecular weight of 3,000 (determined by GPC relative to polystyrene standards), and a molecular weight distribution of 1.62.

### (Synthesis Example 4)

To toluene (40 g) heated to 105°C, a solution prepared by dissolving methyl methacrylate (67 g), butyl acrylate (5 g), stearyl methacrylate (15 g), 3-methacryloxypropyltrimethoxysilane (5 g), γ-mercaptopropyltrimethoxysilane (8 g), and the polymerization initiator 2,2'-azobisisobutyronitrile (3 g) in toluene (15 g) was added dropwise over five hours. Then, the mixture was stirred for two hours. To the resulting mixture was added a solution prepared by dissolving 2,2'-azobisisobutyronitrile (0.3 g) in toluene (10 g), and the mixture was stirred for two hours. In this manner, an acrylic copolymer (B-2) having 1.9 reactive silyl groups was obtained which had a solid content concentration of 60% by weight, a number average molecular weight of 3,100 (determined by GPC relative to polystyrene standards), and a molecular weight distribution of 1.66.

Examples and comparative examples are shown below.

### (Examples 1 to 5, Comparative Examples 1 and 2)

Components (A), (B), (C), and (D) and a stabilizer were mixed at the ratio shown in Table 1 (the amount of the component (B) is the solids content excluding toluene). Then, toluene was evaporated by heating under reduced pressure at 120°C. Then, adhesion promoters and a dehydrating agent shown in Table 1 were added and the mixture was stirred for five minutes. To the mixture was added a curing catalyst, and the resulting mixture was stirred for five minutes. After vacuum degassing, the resulting one-pack moisture-curable reactive hot-melt adhesive was put in a metal container. The one-pack moisture-curable reactive hot-melt adhesives thus obtained were evaluated as follows.

### • Adhesion

To a cold-rolled steel sheet (dull-finished as defined in JIS G3141) and a cold-rolled steel sheet which had been coated with rust-proof oil and then left vertically for 24 hours, each moisture-curable reactive hot-melt adhesive was applied in a bead pattern, followed by curing at 23 °C for seven days. Then, the cured products were peeled therefrom, and the adhesion conditions were observed and evaluated as follows.
"Good": The adhesive was left on the steel sheet side.
"Poor": The adhesive was not left on the steel sheet side.

Table 1 shows the evaluation results.

**[Table 1]**

| | | | Example 1 | Example 2 | Example 3 | Example 4 | Example 5 | Comparative Example 1 | Comparative Example 2 |
|---|---|---|---|---|---|---|---|---|---|
| Component (A) | A-1 | | 50 | 50 | 50 | 50 | | 50 | 100 |
| | A-2 | | | | | | 60 | | |
| Component (B) | B-1 | | 50 | 50 | 50 | 50 | | 50 | |
| | B-2 | | | | | | 50 | | |
| Component (C) | FTR6125 | *1 | 80 | 80 | 80 | 80 | 80 | 80 | 80 |
| Component (D) | M-300 | *2 | 300 | | | | | | |
| | R974 | *3 | | 15 | | 15 | 15 | | 15 |
| | Asahi #55 | *4 | | | 30 | | | | |
| Adhesion promoter | KBM602 | *5 | 3 | 3 | 3 | 3 | 3 | 3 | 3 |
| | A-1120 | *6 | 3 | 3 | 3 | 3 | 3 | 3 | 3 |
| Dehydrating agent | A-174 | *7 | 2 | 2 | 2 | | | 2 | 2 |
| | Dynasylan 6490 | *8 | | | | 2 | 2 | | |
| Curing catalyst | MSCAT02 | *9 | 2 | 2 | 2 | 2 | | 2 | 2 |
| | DBU | *10 | | | | | 2 | | |
| Antioxidant | IRGANOX 245 | *11 | 1 | 1 | 1 | 1 | 1 | 1 | 1 |
| | | | | | | | | | |
| Adhesion | Steel plate (without rust-proof oil) | | Good | Good | Good | Good | Good | Good | Poor |
| | Oily steel plate | | Good | Good | Good | Good | Good | Poor | Poor |

| | | | | | | | | | |
|---|---|---|---|---|---|---|---|---|---|
| *1 Hydrocarbon resin (Mitsui Chemicals. Inc.) *2 Fatty acid-treated heavy calcium carbonate (MARUO CALCIUM CO., LTD.) *3 Hydrophobio finely divided silica (Nippon Aerosil Co., Ltd) *4 Carbon black (ASAHI CARBON CO., LTD.) *5 γ-Aminopropylmethyldimethoxysilene (Momentive) *6 N-(-β-aminoethyl)-γ-aminopropyltrimethoxysilane (Momentive) *7 γ-Methacryloxypropyltrimethoxysilane (Momentive) *8 Condensate of vinyltrimethoxysilane (Degussa) *9 Dibutyltin compound (NIHON KAGAKU SANGYO CO., LTD.) *10 1,8-diazabioyclo[5.4.0]undecene-7 (Wako Pure Chemical Industries, Ltd.) *11 Hindered phenol antioxidant (BASF Japan Ltd) | | | | | | | | | |

As shown in Table 1, the moisture-curable reactive hot-melt adhesives of the examples were excellent in adhesion to oily steel sheets.

### INDUSTRIAL APPLICABILITY

The moisture-curable reactive hot-melt adhesive according to the present invention can be used as a reactive hot-melt adhesive in various applications and for bonding of base materials. Exemplary applications include, but not limited to, building, vehicle, electrical/electronic, fiber/leather/clothing applications. Among these, the adhesive can be suitably used especially in vehicle applications. The present composition is excellent in adhesion to oily surfaces, especially to oily steel sheets.

## Claims

1. Use of a moisture-curable reactive hot-melt adhesive composition as a hot-melt adhesive composition for oily steel sheets, said moisture-curable reactive hot-melt adhesive composition comprising:
(A) an oxyalkylene polymer containing a reactive silyl group, represented by formula (1) below;
(B) an alkyl (meth)acrylate (co)polymer containing a reactive silyl group represented by formula (1) below;
(C) a tackifying resin; and
(D) an inorganic filler which is at least one selected from the group consisting of calcium carbonate, carbon black, and silica,
the formula (1) being:
-SiR¹₃₋ₐXₐ (1)
wherein each R¹ independently represents at least one selected from the group consisting of a C₁₋₂₀ alkyl group, a C₆₋₂₀ aryl group, and a C₇₋₂₀ aralkyl group; X represents a hydroxy or hydrolyzable group; and a represents 1, 2, or 3; and
wherein the moisture-curable reactive hot-melt adhesive composition contains no vinyl chloride resin.

2. The use of a moisture-curable reactive hot-melt adhesive composition according to Claim 1,
wherein the calcium carbonate (D) is calcium carbonate treated with a fatty acid or its salt, or with a resin acid or its salt.

3. The use of a moisture-curable reactive hot-melt adhesive composition according to Claim 1 or 2,
wherein the calcium carbonate (D) is heavy calcium carbonate treated with a fatty acid or its salt, or with a resin acid or its salt.

4. The use of a moisture-curable reactive hot-melt adhesive composition according to any one of Claims 1 to 3,
wherein the silica (D) is hydrophobic silica.

## Patentansprüche

1. Verwendung einer feuchtigkeitshärtbaren reaktiven Schmelzkleberzusammensetzung als eine Schmelzkleberzusammensetzung für ölige Stahlbleche, wobei die feuchtigkeitshärtbare reaktive Schmelzkleberzusammensetzung
(A) ein Oxyalkylenpolymer, das eine reaktive Silylgruppe, dargestellt durch untenstehende Formel (1) enthält;
(B) ein Alkyl(meth)acrylat-(Co)polymer, das eine reaktive Silylgruppe, dargestellt durch untenstehende Formel (1) enthält;
(C) ein klebrigmachendes Harz; und
(D) einen anorganischen Füllstoff, welcher mindestens einer ausgewählt aus der Gruppe bestehend aus Calciumcarbonat, Ruß und Siliciumdioxid ist,
umfasst,
wobei die Formel (1)
-SiR¹₃₋ₐXₐ (1)
darstellt,
wobei jeder Rest R¹ unabhängig mindestens eine ausgewählt aus der Gruppe bestehend aus einer C₁₋₂₀-Alkylgruppe, einer C₆₋₂₀-Arylgruppe und einer C₇₋₂₀-Aralkylgruppe ist; X Hydroxy oder eine hydrolysierbare Gruppe darstellt; und a für 1, 2 oder 3 steht; und wobei die feuchtigkeitshärtbare reaktive Schmelzkleberzusammensetzung kein Vinylchloridharz enthält.

2. Die Verwendung einer feuchtigkeitshärtbaren reaktiven Schmelzkleberzusammensetzung gemäß Anspruch 1, wobei das Calciumcarbonat (D) ein Calciumcarbonat ist, welches mit einer Fettsäure oder deren Salz oder mit einer Harzsäure oder deren Salz behandelt wurde.

3. Die Verwendung einer feuchtigkeitshärtbaren reaktiven Schmelzkleberzusammensetzung gemäß Anspruch 1 oder 2, wobei das Calciumcarbonat (D) ein schweres Calciumcarbonat ist, welches mit einer Fettsäure oder deren Salz oder mit einer Harzsäure oder deren Salz behandelt wurde.

4. Die Verwendung einer feuchtigkeitshärtbaren reaktiven Schmelzkleberzusammensetzung gemäß einem der Ansprüche 1 bis 3, wobei das Siliziumdioxid (D) ein hydrophobes Siliziumdioxid ist.

## Revendications

1. Utilisation d'une composition adhésive thermofusible réactive durcissable à l'humidité en tant que composition adhésive thermofusible pour des tôles d'acier huileuses, ladite composition adhésive thermofusible réactive durcissable à l'humidité comprenant :
(A) un polymère d'oxyalkylène contenant un groupe silyle réactif représenté par la formule (1) ci-dessous ;
(B) un (co)polymère de (méth)acrylate d'alkyle contenant un groupe silyle réactif représenté par la formule (1) ci-dessous ;
(C) une résine collante ; et
(D) une charge inorganique qui est au moins une charge choisie dans le groupe constitué par le carbonate de calcium, le noir de carbone et la silice,
la formule (1) étant :
-SiR¹₃₋ₐXₐ (1)
dans laquelle chaque R¹ représente indépendamment au moins un élément choisi dans le groupe constitué par un groupe alkyle en C₁ à C₂₀, un groupe aryle en C₆ à C₂₀ et un groupe aralkyle en C₇ à C₂₀ ; X représente un groupe hydroxy ou un groupe hydrolysable ; et a représente 1, 2 ou 3 ; et
dans laquelle la composition adhésive thermofusible réactive durcissable à l'humidité ne contient pas de résine de chlorure de vinyle.

2. Utilisation d'une composition adhésive thermofusible réactive durcissable à l'humidité selon la revendication 1,
dans laquelle le carbonate de calcium (D) est un carbonate de calcium traité avec un acide gras ou son sel, ou avec un acide résinique ou son sel.

3. Utilisation d'une composition adhésive thermofusible réactive durcissable à l'humidité selon la revendication 1 ou 2,
dans laquelle le carbonate de calcium (D) est un carbonate de calcium lourd traité avec un acide gras ou son sel, ou avec un acide résinique ou son sel.

4. Utilisation d'une composition adhésive thermofusible réactive durcissable à l'humidité selon l'une quelconque des revendications 1 à 3,
dans laquelle la silice (D) est une silice hydrophobe.
